# EUROPEAN PATENT APPLICATION

(11) **EP 1 591 311 A2**
(43) Date of publication of application: **02.11.2005**
(21) Application number: 05075978.6
(22) Date of filing: 25.04.2005
(51) Int. Cl.: B60P 7/08

(54) **Means for securing a strap to a frame**

(30) Priority: 28.04.2004 GB 0409408
(71) Applicant: Bekaert Handling Limited, Spennymoor Co. Durham DL16 6BP (GB)
(72) Inventor: James, Michael, Hucknall Nottinghamshire NG15 6NW (GB); Bushell, James Ian Gordon, South Wirral Cheshire CH64 6RW (GB)
(74) Representative: Hulse, Thomas Arnold

(57) **Abstract**

A device (11) for securing a strap (A) to a frame member (G) and protecting the strap from chafing comprises a body having at least two wall portions (12, 13) hinged to each other to enable the body to be fitted to a frame member (G) and closed therearound, one wall edge (14) remote from the hinging (15) being provided with a first pair of lugs (16) with holes (17) whose axes lie parallel to the hinge-line (15) and adapted to receive an insertable pin (18) for anchoring between the lugs (16) a loop (F) on one end of a strap (A), a slot (19) parallel to the hinge-line (15) and adapted for emergence of a strap (A) anchored by a pin (18) inserted between the lugs (16), and a pair of detents (20) on a second pair of lugs (21) on the other wall edge (22) remote from the hinging (15) for receiving and retaining end portions (23) of an inserted pin (18) projecting beyond the first pair of lugs (16) to enable the body (11) to be secured around a frame member (G).

## Description

This invention relates to means for securing a strap to a frame, more particularly but not exclusively, a strap to a frame member of one side wall of a rollcontainer of the type having a rear wall and a pair of side walls, the strap being linked to a strap similarly secured to the other side wall to prevent objects (e.g., mailbags) between the side walls falling out through the open front.

It is known to secure a strap to a side wall of a rollcontainer by welding a strut between an intermediate upright member and a horizontal member, then forming and securing a loop of the strap round the strut; the strap being passed round the outer side of the foremost upright frame member for linking to a strap similarly secured to the other side wall; this arrangement having the disadvantages of (a) having to weld struts in place, (b) having to form and secure strap loops round the struts, and (c) where the straps pass round the foremost upright frame members they are very prone to chafing, especially by the similar portions of straps on similar rollcontainers disposed side-by-side during transporting in road or rail vans.

The object of the present invention is, therefore, to provide simple convenient means for securing a strap to a frame member and avoiding any risk of chafing in the aforesaid circumstances.

According to the present invention, a device for securing a strap to a frame member comprises a body having at least two wall portions hinged to each other to enable the body to be fitted to a frame member and closed therearound, one wall edge remote from the hinging being provided with a first pair of lugs with holes whose axes lie parallel to the hinge-line and adapted to receive an insertable pin for anchoring between the lugs a loop on one end of a strap, a slot parallel to the hinge-line and adapted for emergence of a strap anchored by a pin inserted between the lugs, and a pair of detents on a second pair of lugs on the other wall edge remote from the hinging for receiving and retaining end portions of an inserted pin projecting beyond the first pair of lugs to enable the body to be secured around a frame member.

Thus, with a loop on one end of a strap secured by a pin inserted between the first pair of lugs and with the strap passing inside the body to emerge from the slot, the body can be fitted round a frame member and secured by the projecting ends of the inserted pin being received and retained in the detents, with - importantly - the strap being protected against chafing by the overlying wall portion.

The body may be conveniently formed of plastics, in one piece with integral hinging or in two pieces connected by a hinge pin.

If the frame member has a circular cross-section, e.g., being formed from tube, the body may have two generally semi-cylindrical wall portions with longitudinal hinging (which may be at each end of the slot), the initially free longitudinal edges being provided with respectively the lugs with holes, and the detents.

If the frame member has a rectangular or square cross-section, e.g., being formed of appropriate hollow section, the wall portions may each have two leaves, one pair of which may be rigidly joined at 90 while the other pair are then preferably hinged to each other, as well as by hinging to the rigidly joined pair at each end of the slot, to facilitate fitting round the frame member, the rigidly joined pair of leaves having the lugs with the detents and the outer of the mutually hinged leaves having the lugs with the holes. Alternatively, one wall portion may have three leaves each perpendicular to its adjacent leaf, with the free longitudinal edge of one outer leaf provided with the second pair of lugs with detents for receiving and retaining the end portions of an insertable pin, while the free longitudinal edge of the other outer leaf is provided with a third pair of lugs for a secured hinge-pin connecting one edge of the other wall portion, the other edge of which is provided with the first pair of lugs with holes for an insertable pin.

When the body wall portions are made of plastics with integral hinging, the mutually-facing sides of the first and second pairs of lugs are preferably beveled to facilitate fitting of the device by splaying of the wall portions as the device is pushed on to a frame member until the pairs of lugs snap back into place. When one body wall portion has three leaves and the other wall portion is hinged thereto, the mutually-facing sides of the second and third pairs of lugs are preferably beveled for similarly facilitating fitting of the device to a frame member by splaying of the outer leaves.

A channel is preferably provided inside the wall portion provided with the lugs with the detents and extending from between the lugs to the slot, to accommodate a strap without clamping it against the frame member.

One or more holes may be provided in the body for use with screws for fixing the height position of the body on a frame member; conveniently, two holes are provided in the wall portion provided with the lugs with the detents, above and below a channel, as above, for accommodating a strap.

Two embodiments of the invention will now be described, by way of example only, with reference to the accompanying drawings, in which:-
Figure 1 is a fragmentary view of the upper front corner of one side wall of a rollcontainer, as seen from the outer side, showing a known way of securing a strap thereto;
Figure 2 corresponds to part of the right-hand side of Figure 1 but shows a strap secured to the frame member of the side wall by means of one form of device in accordance with the invention;
Figure 3 is a fragmentary view as seen from the right-hand side of Figure 2;
Figure 4 is a perspective view of the device of Figures 2 and 3, as seen from below and open ready to receive a strap and to be applied to a frame member;
Figure 5 corresponds to Figure 4 but shows the device closed, but absent a frame member;
Figure 6 is an elevation from below of the device of Figures 2 to 5, shown as applied to a square section tubular frame member and half in section;
Figure 7 is an elevation of the device as viewed from above in Figure 6, absent a strap and a frame member;
Figure 8 is the corresponding elevation as viewed from below in Figure 6;
Figure 9 corresponds to Figure 3 but shows a device in accordance with the invention securing a strap to a round section tubular frame member; and
Figure 10 is a fragmentary view as seen from the right-hand side of Figure 9.

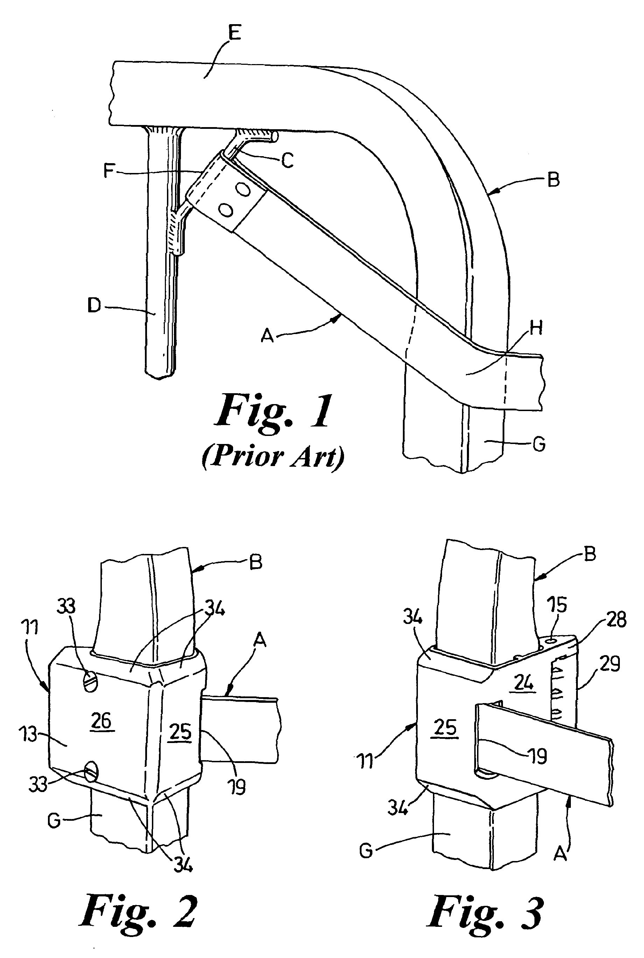

The known way of securing a strap A to a side wall B of a rollcontainer shown in Figure 1 consists of welding a strut C between an intermediate upright member D and a horizontal member E, then forming and securing a loop F of the strap round the strut; the strap A being passed round the outer side of the foremost upright frame member G for linking to a strap (not shown) similarly secured to the other side wall (no shown) of the roll container. In this instance the horizontal member E and the foremost upright frame member G are the top horizontal part and front vertical part, respectively of a side wall frame formed by bending square section tube; however, a strap lower down the side wall, but not shown would be secured to a strut welded between an intermediate horizontal member and an intermediate vertical member.

Disadvantages of this known way are (a) having to weld struts in place, (b) having to form and secure strap loops round the struts, and (c), where the straps pass round the foremost upright frame members (see particularly the portion H of the strap A bent round the corner of the square section tube) they are very prone to chafing, especially by the similar portions of straps on similar rollcontainers disposed side-by-side during transporting in road or rail vans.

In contrast, the device 11 shown in Figure 2 and 3 securing strap A to the foremost upright frame member G of a side wall B of a rollcontainer also protects the strap where it passes round the corner of the square section tube.

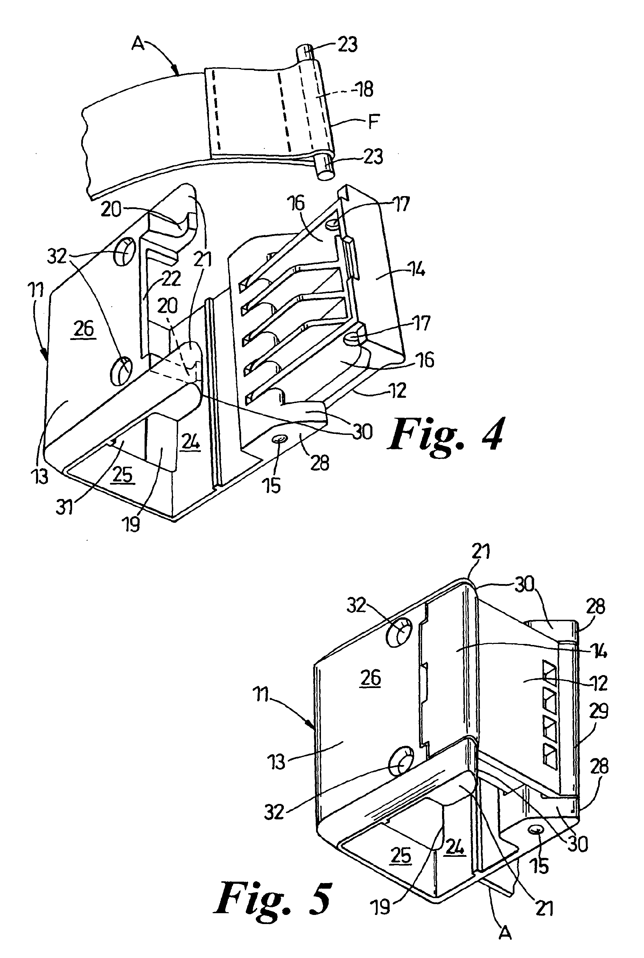

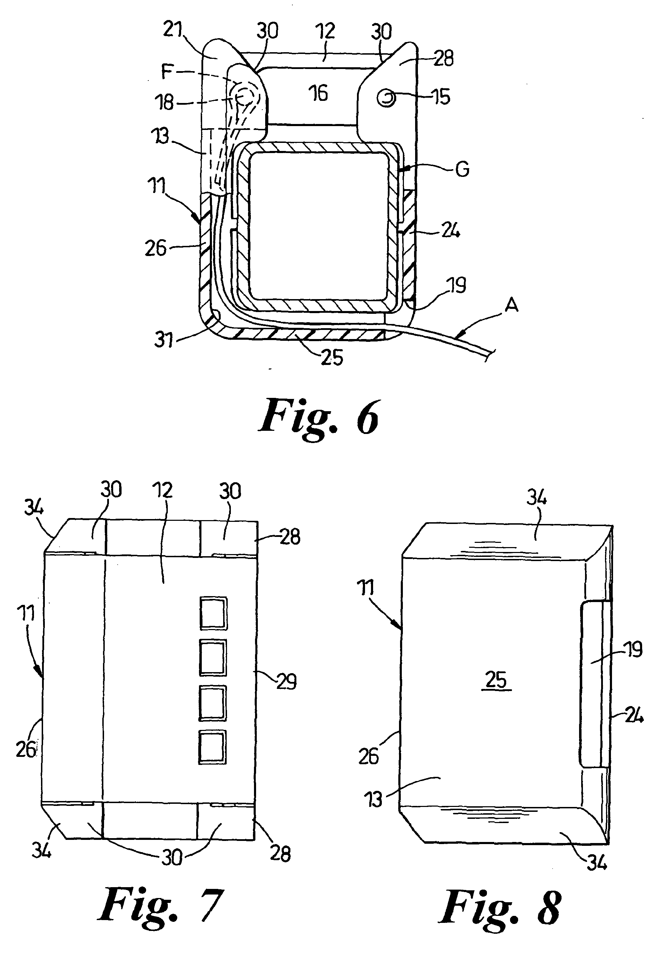

Referring now to Figures 4 to 8, the device 11 comprises a body having two wall portions 12, 13 hinged to each other to enable the body to be fitted to a frame member (G in Figure 6) and closed therearound, the edge 14 of the wall portion 12 remote from the hinge 15 being provided with a first pair of lugs 16 with holes 17 whose axes lie parallel to the hinge-line and are adapted to receive an insertable pin 18 (Figures 4 and 6) for anchoring between the lugs a loop F on one end of a strap A, a slot 19 parallel to the hinge-line and adapted for emergence of the strap, and a pair of detents 20 on a second pair of lugs 21 on the edge 22 of the other wall portion 13 remote from the hinge 15 for receiving and retaining end portions 23 of the inserted pin 18 projecting beyond the first pair of lugs 16 to enable the body 11 to be secured around the frame member G.

Thus, with a loop F on one end of the strap A secured by a pin 18 inserted between the first pair of lugs 16 and with the strap passing inside the body 11 to emerge from the slot 19, the body can be fitted round a frame member G and secured by the projecting ends 23 of the inserted pin being received and retained in the detents 20, with - importantly - the strap being protected against chafing by the overlying wall portions 13.

The body 11 is conveniently formed of plastics, in the two pieces 12, 13 connected by the hinge pin 15, the wall portion 13 having three leaves 24, 25, 26 each perpendicular to its adjacent leaf, with the free longitudinal edge 22 of the leaf 26 provided with the second pair of lugs 21 and detents 20, while the free longitudinal edge 27 of the leaf 24 is provided with a third pair of lugs 28 for the hinge pin 15 connecting one edge 29 of the other wall portion 12, the other edge 14 of which is provided with the first pair of lugs 16 with holes 17 for an insertable pin 18. The mutually facing sides 30 of the second and third pairs of lugs, 21, 28, respectively, are beveled for facilitating fitting of the device 11 to a frame member G by splaying of the outer leaves 24, 26 as the device is pushed on to a frame member until the pairs of lugs snap back into place.

A channel 31 is provided inside the wall portion 13 provided with the lugs 21 and detents 20 and extending from between the lugs 21 to the slot 19, to accommodate a strap A without clamping it against the frame member G (see particularly Figure 6).

Two holes 32 are provided in the wall portion 13, above and below the channel 31 for use with screws 33 (Figure 2 only) for fixing the height position of the body 11 and strap A on the frame member G.

Beveling 34 of the outer ends of the leaves 25, 26 of the body portion 13 reduces the prominence of the device 11 by streamlining its shape.

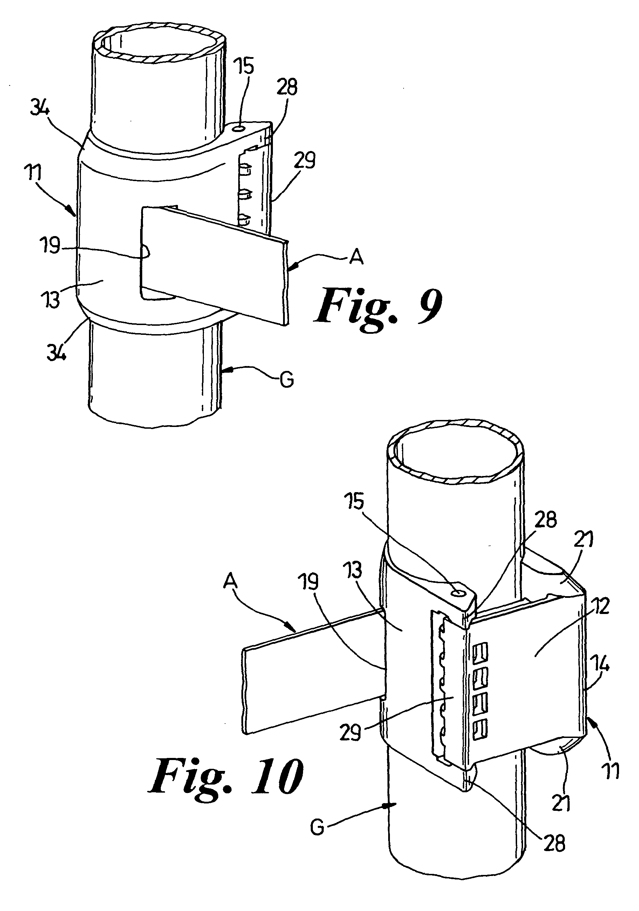

In Figures 9 and 10, the wall portion 13 of the device 11 is generally U-shaped so as to fit a round frame member G, the wall portion 12 and other features being the same as in the device of Figures 2 to 8.

## Claims

1. A device (11) for securing a strap (A) to a frame member (G) comprising a body having at least two wall portions (12, 13) hinged to each other to enable the body to be fitted to a frame member (G) and closed therearound, one wall edge (14) remote from the hinging (15) being provided with a first pair of lugs (16) with holes (17) whose axes lie parallel to the hinge-line (15) and adapted to receive an insertable pin (18) for anchoring between the lugs (16) a loop (F) on one end of a strap (A), a slot (19) parallel to the hinge-line (15) and adapted for emergence of a strap (A) anchored by a pin (18) inserted between the lugs (16), and a pair of detents (20) on a second pair of lugs (21) on the other wall edge (22) remote from the hinging (15) for receiving and retaining end portions (23) of an inserted pin (18) projecting beyond the first pair of lugs (16) to enable the body (11) to be secured around a frame member (G).

2. A device as in Claim 1, **characterised in that** the body (11) is formed of plastics

3. A device as in Claim 2, **characterised in that** the body (11) is formed in one piece with integral hinging.

4. A device as in Claim 1 or Claim 2, **characterized in that** the body (11) is formed in two pieces (12, 13) connected by a hinge pin (15)

5. A device as in any one of Claims 1 to 4, **characterized in that** for securing to a frame member (G) having a circular cross-section the body (11) has two generally semi-cylindrical wall portions with longitudinal hinging, the initially free longitudinal edges being provided with respectively the lugs with holes, and the detents.

6. A device as in Claim 5, **characterized in that** the hinging is at each end of the slot.

7. A device as in any one of Claims 1 to 4, **characterized in that** for securing to a frame member (G) having a rectangular or square cross-section the wall portions each have two leaves, one pair of which may be rigidly joined at 90° while the other pair are hinged to each other, as well as by hinging to the rigidly joined pair at each end of the slot, to facilitate fitting round the frame member, the rigidly joined pair of leaves having the lugs with the detents and the outer of the mutually hinged leaves having the lugs with the holes.

8. A device as in any one of Claims 1 to 4, **characterized in that** for securing to a frame member (G) having a rectangular or square cross-section one wall portion (13) has three leaves (24, 25, 26) each perpendicular to its adjacent leaf, with the free longitudinal edge of one outer leaf (26) provided with the second pair of lugs (21) with detents (22) for receiving and retaining the end portions (23) of an insertable pin (18), while the free longitudinal edge (29) of the other outer leaf (24) is provided with a third pair of lugs (28) for a secured hinge-pin (15) connecting one edge (29) of the other wall portion (12), the other edge (14) of which is provided with the first pair of lugs (16) with holes (17) for an insertable pin (18).

9. A device as in Claim 2 in combination with Claim 3, **characterized in that** the mutually-facing sides of the first and second pairs of lugs are beveled to facilitate fitting of the device by splaying of the wall portions as the device is pushed on to a frame member until the pairs of lugs snap back into place.

10. A device as in Claim 2 in combination with Claims 4 and 7, **characterized in that** with one body wall portion (13) having three leaves (24, 25, 26) and the other wall portion (12) is hinged thereto, the mutually-facing sides (30) of the second and third pairs of lugs (21, 28) are beveled for facilitating fitting of the device (11) to a frame member (G) by splaying of the outer leaves (24, 26).

11. A device as in any one of Claims 1 to 10, **characterized in that** a channel (31) is provided inside the wall portion (13) provided with the lugs (21) with the detents (20) and extending from between the lugs (21) to the slot (19), to accommodate a strap (A) without clamping it against the frame member (G).

12. A device as in any one of Claims 1 to 11, **characterized in that** one or more holes (32) is or are provided in the body (11), for use with screws (33) for fixing the height position of the body (11) on a frame member (G).

13. A device as in Claim 11, **characterized in that** two holes (32) are provided in the wall portion (13) provided with the lugs (21) with the detents (20) above and below the channel (31).
